Europäisches Patentamt

(19) European Patent Office

Office européen des brevets

(11) Publication number: 0 151 660
A2

## (12) EUROPEAN PATENT APPLICATION

(21) Application number: 84101402.0

(22) Date of filing: 10.02.84

(51) Int. Cl.⁴: B 29 D 11/00
B 32 B 15/08

(43) Date of publication of application:
21.08.85 Bulletin 85/34

(84) Designated Contracting States:
BE DE FR GB

(71) Applicant: NMD, Inc.
40 Abeel Road
Cranberry New Jersey 08512(US)

(72) Inventor: Skolnick, Barry
18 Meadow Lane
E. Windsor New Jersey 08520(US)

(72) Inventor: Pifer, Joe
114 So. 5th Avenue
Highland Park New Jersey 08904(US)

(74) Representative: Graf, Helmut, Dipl.-Ing.
Greflinger Strasse 7 Postfach 382
D-8400 Regensburg(DE)

(54) Improved heat mirror.

(57) An improved heat mirror for original or retrofit installation on building windows comprising (1) a flexible or rigid transparent substrate, (2) a conductive metal layer of silver, gold, copper or aluminum deposited on the substrate to a thickness which permit 40% to 70% visible light transmission, and (3) an organic coating of controlled thickness. The coating substantially increases the light transmission characteristics of the laminate while maintaining a high level of reflectivity to infrared wave-lengths associated with normal heating conditions within a building.

Croydon Printing Company Ltd

# IMPROVED HEAT MIRROR

The present invention relates to an improved heat mirror. More particularly, the invention relates to an improved heat mirror adapted for use in connection with windows or window systems to improve the heating efficiency of buildings.

Heat mirrors and, particularly, transparent heat mirrors for building windows are generally known in the prior art. In one typical type of known heat mirror, a thin film of an inorganic material, e.g., indium-tin oxide or a similar doped metal oxide, is coated on a glazing material. The coating is essentially opaque to wavelengths in the infrared range which are associated with normal heating conditions in a building and reflects those wavelengths back into the interior of the building thereby reducing the heat loss. The coatings, however, are substantially transparent to wavelengths in the visible light transmission range and the near infrared range and therefore permit sunlight to enter into a room thereby further increasing thermal efficiency as a result of heat gain from the sunlight. Heat mirrors which function in the foregoing manner have also been constructed from multi-layer laminates of inorganic material comprising a conductor such as silver, copper or gold sandwiched between dielectric anti-reflection layers, e.g., titanium dioxide.

Despite the obviously desirable characteristics of the foregoing heat mirrors, they have not been extensively used on a commercial scale because the raw materials and processing required to produce them are expensive, and those embodiments which rely on the presence of a metallic layer are susceptible to corrosion which destroys the useful properties of the material.

Solar control films are also well known in the art and have been described in many patents, including U.S. Patent Nos.

3,069,301; 3,290,203; 3,398,040; 3,429,733; and 3,775,226. In recent years, the use of solar control films on windows has gained increasing commercial acceptance, particularly in commercial buildings installations. Unlike heat mirrors, which selectively transmit visible and near-infrared wavelengths but reflect infrared wavelengths to produce a net heat gain within a room, solar control films non-selectively reduce the transmission of infrared, visible and ultraviolet radiation from the sun and are designed to reduce solar heat gain. However, the techniques for the manufacture of solar control films are well established and the materials of construction are relatively inexpensive as compared to the known types of heat mirrors.

It is an object of the present invention to provide an improved heat mirror.

Yet another object of the present invention is to provide an improved heat mirror which is of relatively inexpensive construction and exhibits substantial corrosion resistance.

Still a further object of the present invention is to provide an improved heat mirror which may be manufactured in accordance with the same techniques which are used in the manufacture of solar control films.

The foregoing objects are accomplished by providing a novel laminate structure comprising (1) a transparent substrate, (2) a conductive layer on the substrate which is capable of visible light transmission, and (3) an organic coating layer of critically controlled thickness overlaying the conductive layer. It has now been discovered that the foregoing laminate structure produces significant enhancement in the ability of the conductive metal layer to transmit visible light while retaining the capability of substantial reflectance of infrared wavelengths.

-2-

Accordingly, the use of the foregoing laminate as part of either an original window construction or as a retrofit film, in a manner analogous to a solar control film results in a substantial increase in heating or air conditioning efficiency.

The foregoing and further features of the invention will become further apparent from the following more detailed specification and accompanying drawing in which:

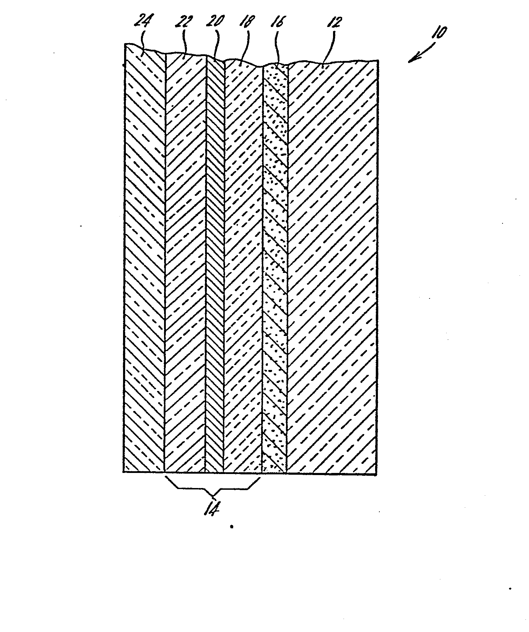

Fig. 1 is a cross-sectional view of a heat mirror constructed in accordance with the invention.

Referring to the drawing, there is shown a cross-section of a composite laminate 10 comprising a plastic or glass glazing 12 to which is laminated a heat mirror 14. Lamination is accomplished by the use of a pressure sensitive adhesive or heat seal material 16 with the choice of a particular material being determined by the nature of the glazing material. Heat mirror 14 comprises a polyester film layer 18, an adjacent metallic layer 20, preferably silver, and an organic film coating 22, preferably an acrylic or polyester resin. A protective coating 24, which may be of the same or a different material than the organic coating, overlays the organic coating. The protective coating enhances the corrosion resistance of the laminate but is not essential to achieving the novel result of the invention.

The nature of the transparent substrate employed in the novel heat mirror laminate of the invention is not critical and any rigid or flexible material which is transparent to visible light as well as wavelengths of radiant energy in the solar range of 400 to 2700 nanometers may be employed. A highly preferred polyester is polyethylene terephthalate film, e.g., the material sold by I C I under the trademark Melinex. This film has been widely employed in the manufacture of solar control films and is preferred because of its clarity, uniformity, toughness, strength and dimensional stability under widely varying temperature and humidity conditions. It is also particularly receptive to a vapor-deposited metal coating. However, a wide variety of either rigid or flexible substrates may also be employed, including glass and plastics such as polyvinylchloride, cellulose acetate, cellulose acetate propionate, cellulose acetate butyrate, polyethylene, polypropylene, polystyrene, polybutylacrylate and polycarbonate among others. The stability of these plastic films may be improved, if necessary or desirable, by known techniques provided that the light transmission characteristics of the film are unaffected. It should be understood that the selection of a particular substrate may depend upon the physical characteristics desired for a particular application. For example, a thin flexible film may be selected where the heat mirror is to be installed on a existing window, whereas a thicker and non-flexible structure may be selected where the substrate is the glazing material in a new or replacement window installation. In a typical retrofit application, a polyester film in the range of 0.25 to 14 mils, e.g., 0.92 mils is preferred.

The conductive layer of the novel heat mirror laminate is a metal or alloy, preferably silver, although other metals such as gold, copper, aluminum and the like can also be employed. The conductive metal layer is deposited on the transparent substrate by conventional vapor deposition techniques which are well known in the prior art. Alternatively, a metallized coating can be applied to the substrate by sputtering, electroplating, vacuum metallizing electron beam or any of the other techniques known in the art for forming and depositing a metallized coating.

The amount of metal deposited on the substrate is an important feature of the invention. Ordinarily, the amount of

-4-

metal deposited on the transparent substrate is measured and controlled by the reduction in light transmission of the substrate to the range of 40% to 75% light transmission, e.g., 60% transmission, at 550 nanometers. In order to meet this functional requirement, the coating will normally have a thickness in the range of 30 to 300 angstroms, preferably, 60 to 160 angstroms. It will be appreciated, however, that the thickness is highly dependent upon the type of metal used. By way of contrast, the typical solar control film which is designed to non-selectively reflect both visible and infrared wavelengths typically has a thicker metallized coating and a significantly lower, e.g., 10% to 35%, visible light transmission.

It will be apparent to those persons skilled in the art that the thickness of the metallized coating and its degree of light transmission is not critical and that it may be varied within reasonable limits depending upon the ultimate environment in which the heat mirror will be used. For example, in climatic conditions or physical locations where a large solar heat gain may be possible during cold weather conditions, the thickness of the metal coating may be controlled so as to permit a higher degree of light transmission thereby producing a film having a higher degree of emissivity, i.e., a lower degree of infrared reflectance ability. These two factors must be balanced for optimal thermal efficiency in any particular environment. The optimal thickness will also depend on whether the application is intended for a region where heating costs or air conditioning costs predominate.

The application of an organic film coating over the metallized layer is a critical feature of the invention since the coating serves to produce the essential reduced reflection in the visible or solar spectrum, i.e., an increase in the visible light transmission characteristics of the laminate as compared to an uncoated laminate consisting only of the substrate and metallized coating. This reduced reflection increases the light transmission capability of the metallized film by amounts from about 8% up to about 25% and, accordingly, makes possible a significant solar heat gain without sacrifice of the infrared emissivity characteristic of the metal layer. The organic coating must be transparent in the visible light spectrum and be relatively transparent in the 4,000 to 14,000 nanometer range. It must also provide corrosion protection for the metal layer and be capable of being applied using techniques which are conventional in the manufacture of solar control materials.

All organic coatings applied in accordance with the teachings herein will produce some degree of improvement in visual light transmission with varying effects on infrared reflectance characteristics. However, the organic coatings which are particularly useful in the laminate of the invention include thermoplastic or thermosetting polyester or acrylic polymers. Particularly preferred materials include a modified polyester solution sold by National Starch and Chemical Corporation under the trademark Resyn 30-9107, which may be combined with a suitable isocyanate curing agent, e.g., RC-803 curing agent; an hydroxy functional acrylic resin such as the material sold under the trademark Acryloid AU608 by Rohm and Haas Company; and a variety of similar commercially available polyester or acrylic materials sold by the foregoing companies, and others which may be formulated with or without catalysts to produce an organic coating exhibiting reduced reflection. Ordinarily, the polymer will be combined with a solvent such as toluene, methyl ethyl ketone, or cellusolve acetate in order to control both the solids content of the coating and the flow of the coating to assure a uniform coating.

The amount of coating applied to the metallized layer is critical to obtaining the reduced reflection. Specifically, the coating material should be applied in a range of 0.01 to 0.1 pounds per 3,000 sq. ft. of metallized substrate, preferably 0.02 to 0.06 pounds per 3,000 sq. ft. of metallized substrate. It should be understood that the foregoing amounts represent the dry coating weight after application and evaporation of all volatile solvents or other volatile materials forming part of the original coating composition. The optimal thickness represents a balance between a thin coat which is desired for optimal reduction in reflection and a thicker coat which enhances corrosion resistance. Coating thickness is normally determined by weighing a sample film of known dimensions containing a dry coating using an electric balance capable of measuring differences up to 0.0001 grams; thereafter removing the coating; and re-weighing the uncoated film.

The manner of applying the reflection reducing organic coating to the metallized substrate is not critical and any of the wide variety of prior art techniques normally employed in the application of a coating to a substrate may be employed. These include reverse roll coating, gravure roll coating, air knife systems or, preferably, a Meyer bar coating system. In order to ensure consistency and proper optics, a scanning or multiple head stationary optical densichron is used during the coating operation. The organic coating may be applied in one or more coats, subject only to the requirement that the total amount applied falls within the desired range of coating thickness.

The invention will be further understood by reference to the following illustrative examples:

-7-

Example 1

A 92 gauge polyester film (Melinex 442) was coated by conventional vapor deposition techniques with a pure silver metal to a thickness of about 60 angstroms, i.e., a thickness which reduced the light transmission of the film to about 60% in the 550 nanometer range. The silver layer was coated with an organic coating of 2 parts of National Starch Resyn 30-9107, 2 parts of National Starch RC803 isocyanate curing agent, 120 parts toluol, 5 parts methyl ethyl ketone and 6 parts of cellusolve acetate. Excess coating was applied through the use of a standard gravure cylinder having a 140 quadrangular roll. A Meyer bar system was employed to remove a predetermined amount of the excess coating. This system employs a combination of specific diameter wires and rolls to remove a controlled amount of coating. The coatings were dried at 266° F. until dry and a coating pickup of 0.025 pounds per ream was measured by the previously described technique of weighing the coated film and thereafter removing the coating and reweighing the uncoated film.

A pressure sensitive adhesive was applied to the polyester film side of the forgoing laminate, and the laminate was thereafter applied to a window using water and a squeegee to position the film and remove excess water. The light transmission characteristic of the coated film was measured using an instrument known as a Welsh Scientific densichron. The reflectance or emissivity characteristic of the coated film, i.e., the ability to reflect radiant heat so as to keep it from escaping from a room was measured using a spectrophotometer capable of maintaining selected wavelengths in the range of 300 to 2700 nanometers, and a Lion's Model No. 25B-7 emissometer.

The organic film coated laminate of this example exhibited an increase of approximately 9% (to about 69%) in light

-8-

transmission with no appreciable change in emissivity as compared to the metallized film without the organic coating.

Example 2

A film laminate was made and tested in the manner described in Example 1, except that only 60 parts of toluol solvent was used in lieu of 120 parts, and the dry coating weight after application was found to be 0.0525 pounds per ream. The light transmission increased from 55% to 74% without any reduction in emissivity. In another experiment, the pickup was brought to 0.063 pounds per ream with a 14% increase in visible light transmission. When the coating pickup (on a dry basis) was increased to 0.105 pounds per ream through the use of a heavier coating rod (a number 5 rod) and through a further decrease in the solvent content of the composition, a 2% decrease in light transmission occurred, and a 1% increase in emissivity was also noted.

Example 3

A one mil thick polyester film having a silver coating deposited in a manner similar to that described in Example 1 was found to have a light transmission characteristic of 57% and an emissivity of .13, i.e., the ability to reflect 87% of the wavelengths in the infrared range. When a one mil thick clear film was laminated to the foregoing material, the visual transmission increased to 60% but emissivity worsened to 0.42.

In a similar experiment, a clear vinyl chloride resin coating (sold under the trademark MCH by Union Carbide) was applied to the silver coated polyester film at a coating pickup of 2 pounds per ream. Light transmission increased from 57% to 61% but emissivity worsened from 0.09 to 0.28.

The foregoing experiments demonstrate the critical nature of the organic coating of the invention in providing the

-9-

desired increase in light transmission without any reduction in emissivity.

CLAIMS

1.   A heat mirror, characterized by a substrate which is transparent to visible light and to
radiant energy in the solar range, a conductive layer
deposited on said substrate, the thickness of said
conductive layer being sufficient to reduce the visible
light transmission of said substrate to the range of
about 40 to about 75% of said uncoated substrate and
an organic coating overlying said conductive layer,
said organic coating being relatively transparent to
wavelengths in the range of 4,000 to 14,000 nanometers,
said coating being applied in an amount sufficient to
cause an increase of about 8 to 25% in the light transmission characteristic of the conductive coated substrate while substantially retaining the emissivity
level of said conductive coated substrate.

2.   The heat mirror of claim 1, characterized
in that said substrate is a plastic film.

3.   The heat mirror of claim 1 or 2,
characterized in that said substrate is a polyester film.

4.   The heat mirror of claim 1, 2 or 3,
characterized in that said conductive layer is a metal.

5.   The heat mirror of claim 4, characterized
in that said conductive layer is silver.

6.   The heat mirror of any one of claims
1-5, characterized in that said conductive layer has
a thickness in the range of 30 to 300 angstroms, preferably 60 to 120 angstroms.

7. The heat mirror of any one of claims 1-6, characterized in that the main film forming component of said organic coating is a polyester or acrylic polymer.

8. The heat mirror of any one of claims 1-7, characterized in that said organic coating is applied in an amount of 0.01 to 0.1 pounds per 3,000 square feet of metallized substrate.

9. The heat mirror according to claim 8, characterized in that said organic coating is initially applied as a liquid in an amount sufficient to produce a dry coating thickness of 0.01 to 0.1 pounds per 3,000 square feet of metallized substrate.

0151660